# EUROPEAN PATENT SPECIFICATION

(11) **EP 1 472 445 B1**
(45) Date of publication and mention of the grant of the patent: **04.06.2008**
(21) Application number: 02703702.7
(22) Date of filing: 28.02.2002
(51) Int. Cl.: F02B 69/06, F01L 9/02, F02D 13/04, F02D 9/02, F02B 1/12

(54) **DUAL MODE ENGINE WITH CONTROLLED AUTO-IGNITION**
BRENNKRAFTMASCHINE MIT ZWEI BETRIEBSARTEN UND GESTEUERTER SELBST-ZÜNDUNG
MOTEUR A DEUX MODES DE FONCTIONNEMENT AVEC AUTO-ALLUMAGE COMMANDE

(30) Priority: 14.03.2001 GB 0106298
(43) Date of publication of application: 03.11.2004
(73) Proprietor: Ford Global Technologies, LLC, Dearborn, MI 48126 (US)
(72) Inventor: MA, Thomas, Tsoi-Hei, South Woodham Ferrers, Essex CM3 5YL (GB)
(74) Representative: Messulam, Alec Moses
(86) International application number: PCT/GB2002/000831
(87) International publication number: WO 2002/073014

(56) References cited:
- GB-A- 233 682
- GB-A- 1 591 050
- US-A- 5 007 382
- US-A- 5 158 044
- US-A- 5 517 951
- US-A- 5 562 070
- PATENT ABSTRACTS OF JAPAN vol. 1998, no. 13, 30 November 1998 (1998-11-30) & JP 10 227226 A (DAIHATSU MOTOR CO LTD), 25 August 1998 (1998-08-25)

## Description

The present invention relates to an internal combustion engine having exhaust and intake poppet valves whose opening and closing events relative to the rotation of the engine crankshaft are selectable such that the engine may be switched between a two-stroke mode and a four-stroke mode.

Two-stroke engines have certain advantages over four-stroke engines in that, for a given cylinder displacement, they are capable of producing higher torque, especially at low engine speeds. However, they also have many disadvantages which, despite many efforts to overcome them, have precluded their use in motor vehicles. Among these disadvantages are poor durability and poor emissions. In particular, combustion stability and HC emissions are poor under low load condition, while during high load conditions the NOx emissions cannot be reduced by a three-way catalytic converter because the exhaust gases of a two-stroke engine inevitably contain excess air.

With a view to obtaining the advantages of both types of engine, there have already been proposed engines with poppet valves that are switchable between two-stroke and four-stroke operation. US 5,158,044 shows how this may be achieved using two different camshafts with switchable tappets and US 5,517,951 aims to achieve the same objective with a camless engine, where the poppet valves are opened and closed hydraulically or electromagnetically. In both these cases, the engines are constructed as conventional four stroke engines with proven durability, and a two-stroke mode is achieved by opening and closing the poppet valves once per crankshaft revolution instead of once in every two crankshaft revolutions. In both these proposals, as well as similar proposals to design dual-mode engines, the intention has been to operate in four-stroke mode under low load for better combustion stability and in two-stroke mode under high load for better torque. However, these prior art dual-mode engines did not address the problem of exhaust emissions. In particular, the inability to reduce NOx emissions when operating at high load in two-stroke mode, even with the use of state of the art after-treatment technology, prevents such engines from complying with current legislation.

The present invention is a development of the invention disclosed in co-pending GB Patent Application No. 0105724.9, wherein the engine is designed to operate in two-stroke mode under low load conditions and in four-stroke mode under high load conditions. This is the opposite of the prior art dual mode engines because the invention is concerned with improving low load emissions and fuel economy whereas the earlier proposals are concerned with improving full load performance.

Two-stroke engines operating under low load conditions are not normally associated with clean burning and good combustion stability. In the present invention, these issues are addressed by running the engine with controlled auto-ignition under low load operating conditions.

The concept of controlled auto-ignition is known per se and relies on the temperature of the charge being so high that spontaneous ignition occurs from multiple ignition sites instead of relying on conventional ignition in which a flame propagates from an ignition kernel. Such auto-ignition can be brought on by retaining a large proportion of hot exhaust gases in the combustion chamber at the end of each engine cycle and is characterised by extremely low NOx emissions and smooth engine running. Furthermore the reduced pumping work offers significant improvements in fuel economy, especially during low load operation.

The poor scavenging that normally occurs in two-stroke engines especially during low load operation is conducive to creating the necessary conditions for auto-ignition but is not of itself sufficient. In particular, it has not previously proved possible to operate a two-stroke or a four-stroke engine with controlled auto-ignition under idling and very low load conditions, these being the very conditions under which maximum fuel economy benefit could be gained by operating in this manner.

The fact that engines cannot run under very low load conditions with controlled auto-ignition mode is particularly troublesome when the engine is an automotive engine as this introduces serious complications into the design of the engine control system. This is because frequent changes in ignition mode are needed between very low and moderate driving loads, and switching between the conventional ignition and controlled auto-ignition modes seamlessly is difficult to achieve.

The present invention seeks to provide a dual mode automotive engine which, when operating in two-stroke mode, can be run with controlled auto-ignition under the lowest of driving loads so as to obviate the need to change between ignition modes when the vehicle is driven near the lower end of the load range of the engine.

In accordance with the present invention, there is provided an internal combustion engine having exhaust and intake poppet valves in which the valve events relative to the rotation of the engine crankshaft are selectable such that the engine may be switched between a two-stroke mode and a four-stroke mode, wherein when the engine is operating under low load conditions in the two-stroke mode, the exhaust and intake valve events are timed to occur consecutively with little or no overlap between them, the resulting poor scavenging of burnt gases serving to retain a sufficient proportion of hot residual gases in the combustion chamber to support controlled auto-ignition.

In the invention, the additional retention of hot residual gases necessary to achieve controlled auto-ignition is achieved by modifying the valve timing so that the exhaust and intake events either do not overlap at all or overlap only slightly. This is in marked contrast to the valve timing used in a conventional two-stroke engine where a large overlap period is used to achieve good scavenging.

In the present invention, exhaust gases are only expelled during the so-called blowdown phase, at the instant when the combustion chamber pressure is above ambient pressure and the exhaust valve first opens. Once the exhaust valve has opened, pressure equalisation occurs and the continued downwards movement of the piston does not act to expel any more burnt gases (on the contrary some exhaust gases may even be sucked back into the combustion chamber). At this stage in a conventional two-stroke engine, positive intake pressure and the flow dynamics of the fresh intake charge are used to scavenge the burnt gases, that is to say to expel the vestiges of the burnt gases of the previously cycle into the exhaust system and to replace them with the fresh charge. However, in the present invention, this scavenging process is prevented by closing of the exhaust valve before or at about the same time as opening of the intake valve, to trap a higher proportion of the burnt gases in the combustion chamber. When the fresh charge is subsequently forced in under pressure (for example by a supercharger or a variable geometry turbocharger), little mixing will occur with the burnt gases, thereby creating the necessary temperature conditions to support controlled auto-ignition.

It has been found, surprisingly, that by resorting to the modified valve timing proposed by the present invention it is possible to maintain controlled auto-ignition even when the engine is idling.

The minimal valve overlap required in the present invention may be achieved in a variety of ways.

In a first embodiment of the invention, which can be readily achieved in an engine having fully programmable camless valve actuation (as described for example in US-A-5,562,070 which is imported herein by reference), the closing time of the exhaust poppet valve may be advanced at the same time as the opening time of the intake valve is retarded without altering the opening time of the exhaust valve nor the closing time of the intake valve. In other words, the two valve events are shortened to remove the conventional overlap between them. In this case, the expansion ratio and the compression ratio of the engine are unaffected.

In an alternative embodiment that can be implemented by changing the relative phase between separate exhaust and intake camshafts having cams of fixed profile fitted with phasers, the exhaust event is advanced significantly to reduce the valve overlap. At the same time, the intake event may be slightly retarded to assist in reducing the valve overlap. In this case, because the exhaust event duration is fixed, advancing the entire event will also advance the opening time of the exhaust valve thus shortening the expansion period. This may be used to advantage when the fresh intake charge is supplied by a variable geometry turbocharger since the earlier blowdown would result in more energy being delivered to the exhaust gas turbine for maintaining sufficient speed and turbocharger boost pressure even under idle conditions.

The invention will now be described further, by way of example, with reference to the accompanying drawings, in which:
Figure 1 is a schematic section through an engine cylinder,
Figure 2 is a timing diagram showing the exhaust and intake events in a conventional two-stroke engine,
Figure 3 is a timing diagram similar to that of Figure 2 for an engine in accordance with one embodiment of the invention, the timing being suitable for implementation by a camless valve actuation system, and
Figure 4 is a timing diagram similar to that of Figure 2 for an engine in accordance with a second embodiment of the invention, the timing being suitable for implementation by changing the phase of camshafts carrying cams of fixed profile.

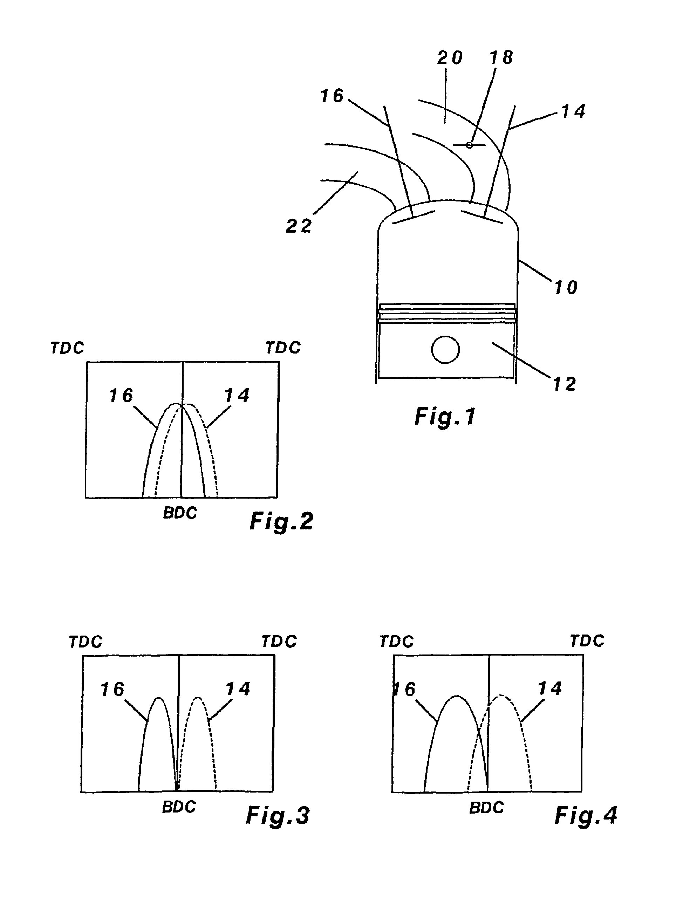

Figure 1 shows an engine having a cylinder 10 with a reciprocating piston 12, an intake poppet valve 14 and an exhaust poppet valve 16. An intake port 20 containing a butterfly throttle 18 leads to the intake valve 14 and an exhaust port 22 leads to the exhaust valve 16. This is the conventional layout for a four-stroke engine and need not therefore be described in greater detail. The only important feature to notice is that the direction of flow from the intake port 20 into the combustion chamber is different from that of a normal cross-flow engine.

The engine as described can clearly operate in the four-stroke mode but in the present invention it is additionally intended to be operated in the two-stroke mode with controlled auto-ignition during idling and through to part load operation. The valve timing diagram when the engine is operating in four-stroke mode under high load is conventional, as is the ignition process, and these will not therefore be described further.

A two-stroke engine would normally have its exhaust and intake valves opened and closed according to the timing diagram of Figure 2. The exhaust valve 16 opens half way through the expansion stroke and closes after the commencement of the compression stroke whereas the intake valve 14 opens towards the end of the expansion stroke and closes half way through the compression stroke. There is thus a considerable area of overlap around the BDC (bottom-dead-centre) position when both valves are open simultaneously. The bulk of the exhaust gases is expelled by blowdown when the exhaust valve 16 first opens and during the overlap period a fresh charge is admitted under pressure through the intake valve 14 and displaces the remainder of the burnt gases out through the still open exhaust valve 16 until the chamber is fully scavenged.

In the present invention, by contrast, the valve overlap must be minimised or eliminated in a manner represented by either one of Figures 3 and 4. In the case of Figure 3, the events of the valves 16 and 14 have been shortened so that the exhaust valve 16 still opens at the same time as in Figure 2 and the intake valve 14 still closes at the same time as in Figure 2, but the valve overlap has been eliminated. Such a valve timing diagram can readily be achieved with a camless valve actuation system which is known per se and may for example be electromagnetically operated under the control of an engine management computer.

In the case of the embodiment of Figure 4, the exhaust and intake event durations are the same as in Figure 2 thereby allowing the use of camshafts having cams of fixed profile. However the phase of the exhaust valve 16 has been advanced in relation to the crankshaft so that the exhaust valve 16 closes at BDC. Figure 4 shows that the intake valve 14 can also be slightly retarded as compared with Figure 2 to open later in the expansion stroke.

In the invention, the blowdown is relied upon almost exclusively to expel the burnt gases from the combustion chamber and once this has occurred steps are taken to prevent the scavenging of the remainder of the burnt gases by the pressurised fresh intake charge. Hence by the time any volume of fresh charge has been forced under pressure into the combustion chamber, the exhaust valve 16 will be closed to trap the residual gases and prevent them from being scavenged. This results in a high proportion of hot burnt gases being retained in the next cycle and by suitable selection of the valve timings it is possible to ensure that controlled auto-ignition occurs both at idling and throughout the low load operating range of the engine.

Because the engine can now operate throughout its lower load range in two-stroke controlled auto-ignition mode, there is considerable simplification of the engine control system in that it is only necessary to regulate the mass of the fresh intake charge forced into the combustion chamber during each cycle. This can be achieved either by means of the butterfly throttle 18 or by regulating the air supply pressure.

The air supply can be pressurised either by means of a supercharger or a turbocharger.

In part load operation, one can continue to run in two-stroke mode with controlled auto-ignition without the need to minimise or eliminate the valve overlap. One can therefore progressively modify the valve timing towards the timing represented by Figure 2. In the case of Figure 3, this is achieved by prolonging the two valve events and in the case of Figure 4, this is achieved by appropriately phasing the camshafts.

The relevance of the geometry of the intake port 20 is that when the engine is operated with a valve overlap in two-stroke mode, one must ensure that the fresh charge does not flow directly into the exhaust port during scavenging, but must follow a long path circling the combustion chamber, this being sometimes referred to as reverse tumble.

## Claims

1. An internal combustion engine having exhaust (16) and intake (14) poppet valves in which the valve events relative to the rotation of the engine crankshaft are selectable such that the engine may be switched between a two-stroke mode and a four-stroke mode, **characterised in that** when the engine is operating under low load conditions in the two-stroke mode, the exhaust and intake valve events are timed to occur consecutively with little or no overlap between them, the resulting poor scavenging of burnt gases serving to retain a sufficient proportion of hot residual gases in the combustion chamber to support controlled auto-ignition.

2. An internal combustion engine as claimed in claim 1, wherein the valve event timing is set so as additionally to permit two-stroke mode operation with controlled auto-ignition when the engine is idling.

3. An engine as claimed in claim 1 or claim 2, wherein the engine poppet valves are opened and closed by a camless valve actuation system

4. An engine as claimed in claim 1 or claim 2, wherein the engine poppet valves are opened and closed by respective camshafts having cams of fixed profile and wherein the valve overlap is reduced or eliminated by advancing the timing of the exhaust camshaft.

5. An engine as claimed in claim 4, wherein the valve overlap is reduced or eliminated by additionally retarding the intake camshaft.

## Patentansprüche

1. Brennkraftmaschine mit Auslaß- (16) und Einlaß- (14) Tellerventilen, worin die Ventilsteuerereignisse in bezug auf die Drehung der Motorkurbelwelle derart wählbar sind, daß der Motor zwischen einem Zweitaktbetrieb und einem Viertaktbetrieb umschaltbar ist,
**dadurch gekennzeichnet, daß**, wenn der Motor unter Niedriglastbedingungen im Zweitaktbetrieb arbeitet, die Steuerzeiten der Auslaß- und Einlaßventilereignisse so eingestellt werden, daß sie nacheinander mit wenig oder null gegenseitiger Überschneidung auftreten, wobei der daraus resultierende schlechte Wirkungsgrad der Spülung der verbrannten Gase dazu genutzt wird, einen ausreichend hohen Anteil heißer Restgase im Brennraum zurückzuhalten, um so eine gesteuerte Selbstzündung zu unterstützen.

2. Brennkraftmaschine nach Anspruch 1, worin die Steuerzeiten für die Ventilereignisse so eingestellt werden, daß zusätzlich der Betrieb im Zweitaktbetrieb ermöglicht wird, wenn der Motor im Leerlauf läuft.

3. Brennkraftmaschine nach Anspruch 1 oder Anspruch 2, worin die Motortellerventile über ein nockenloses Ventilbetätigungssystem geöffnet und geschlossen werden.

4. Brennkraftmaschine nach Anspruch 1 oder Anspruch 2, worin die Motortellerventile über jeweilige Nockenwellen geöffnet und geschlossen werden, welche Nocken mit festem Profil tragen, und worin die Ventilüberschneidung durch Vorverstellen der Steuerzeiten der Auslaßnockenwelle reduziert oder ausgeschaltet wird.

5. Brennkraftmaschine nach Anspruch 4, worin die Ventiltibersahneidung durch zusätzliche Spätverstellung der Einlaßnockenwelle reduziert oder ausgeschaltet wird.

## Revendications

1. Moteur à combustion interne ayant des soupapes champignon d'échappement (16) et d'admission (14), dans lequel les mouvements des soupapes par rapport à la rotation du vilebrequin sont sélectionnables de telle sorte que le moteur puisse être commuté entre un mode à deux temps et un mode à quatre temps, **caractérisé en ce que** lorsque le moteur tourne dans des conditions de charge réduite en mode à deux temps, les mouvements des soupapes d'échappement et d'admission sont calés de sorte à se produire consécutivement avec un chevauchement réduit ou nul entre ceux-ci, la faible évacuation des gaz brûlés servant à retenir une proportion suffisante de gaz résiduaires chauds dans la chambre de combustion pour favoriser un autoallumage contrôlé.

2. Moteur à combustion interne selon la revendication 1, dans lequel le calage des mouvements des soupapes est réglé de manière à permettre de plus le fonctionnement en mode à deux temps avec un autoallumage contrôle lorsque le moteur tourne au ralenti.

3. Moteur selon la revendication 1 ou 2, dans lequel les soupapes champignon du moteur sont ouvertes et fermées par un système d'actionnement de soupape sans came.

4. Moteur selon la revendication 1 ou 2, dans lequel les soupapes champignon du moteur sont ouvertes et fermées par des arbres à cames respectifs ayant des cames de profil fixe et dans lequel le chevauchement des soupapes est réduit ou éliminé en avançant le calage de l'arbre à cames d'échappement.

5. Moteur selon la revendication 4, dans lequel le chevauchement des soupapes est réduit ou éliminé en retardant de plus l'arbre à cames d'admission.
